# EUROPEAN PATENT APPLICATION

(11) **EP 4 851 216 A1**
(43) Date of publication of application: **09.12.2026**
(21) Application number: 25748450.1
(22) Date of filing: 10.01.2025
(51) Int. Cl.: C08G 63/12, B65D 25/14, B65D 65/42, C08G 63/20, C09D 167/00

(54) **POLYESTER RESIN, POLYESTER RESIN COMPOSITION, COATING MATERIAL COMPOSITION, COATING FILM, AND METAL CAN**

(30) Priority: 31.01.2024 JP 2024013102
(71) Applicant: TOYOBO MC Corporation, Osaka-shi, Osaka 530-0001 (JP)
(72) Inventor: MIEDA, Hiroyuki, Otsu-shi, Shiga 520-0292 (JP); GOSHIMA, Hideto, Otsu-shi, Shiga 520-0292 (JP); KANDA, Ryosuke, Otsu-shi, Shiga 520-0292 (JP)
(74) Representative: Müller-Boré & Partner Patentanwälte PartG mbB
(86) International application number: PCT/JP2025/000730
(87) International publication number: WO 2025/164268

(57) **Abstract**

The present invention provides a polyester resin that has good reactivity with a curing agent and is capable of forming a coating film excellent in processability and corrosion resistance.

A polyester resin comprising a polycarboxylic acid component and a polyhydric alcohol component as copolymerization components, the polyester resin satisfying the following requirements (1) to (3): (1) the polyester resin has a glass transition temperature (Tg) of 60°C or higher; (2) the polyester resin has a weight average molecular weight (Mw) of 50,000 or more; and (3) the polyester resin has a hydroxyl value of 182 to 800 eq/ton.

## Description

### TECHNICAL FIELD

The present invention relates to a polyester resin. Specifically, the present invention relates to a polyester resin suitable for a coating for cans. More specifically, the present invention relates to a polyester resin suitable for coating cans for containing beverages and food, and a polyester resin composition, a coating composition, a coating film, and a metal can that comprise the polyester resin.

### BACKGROUND ART

Metal cans such as beverage cans and food cans are coated with an organic resin such as polyester to prevent corrosion of the metal (corrosion resistance) caused by food and to maintain flavor and taste of the contents (flavor preservability). The coating films formed by such coating are subjected, during formation of a mouth part of a bottle can, to a high-load processing such as necking and threading. Accordingly, the coating films are required to exhibit sufficient durability against such post-processing operations (processability). Recently, diversification of can shapes and diversification of can contents have further progressed, and can coatings are required to exhibit further improved corrosion resistance and processability.

To address this issue, for example, Patent Document 1 discloses a coating material that contains a hydroxy group-containing polyester resin and thereby has excellent sterilization stability especially in an acidic medium and excellent flexibility.

### CITATION LIST

### PATENT LITERATURE

Patent Document 1: JP 2005-42110 A

### SUMMARY OF THE INVENTION

### PROBLEMS TO BE SOLVED BY THE INVENTION

However, the hydroxy group-containing polyester resin disclosed in Patent Document 1 has a low glass transition temperature of -9°C to 40°C, and therefore, has a problem that the corrosion resistance is insufficient depending on the can contents. Furthermore, the molecular weight of the hydroxy group-containing polyester resin is low, which causes a problem of insufficient processability depending on the part of the can.

The present invention provides a polyester resin that has good reactivity with a curing agent and is capable of forming a coating film excellent in processability and corrosion resistance.

### SOLUTION TO THE PROBLEMS

The inventors of the present invention conducted intensive studies on the above problems, and found that it is possible to obtain a polyester resin having a high glass transition temperature (Tg) as well as a high weight average molecular weight (Mw) by making the polyester resin highly branched and setting the hydroxyl value of the polyester resin to a predetermined value or more. Based on this finding, the present invention has been completed. That is, the present invention has the following configuration.
[1] A polyester resin comprising a polycarboxylic acid component and a polyhydric alcohol component as copolymerization components, the polyester resin satisfying the following requirements (1) to (3):
   (1) the polyester resin has a glass transition temperature (Tg) of 60°C or higher;
   (2) the polyester resin has a weight average molecular weight (Mw) of 50,000 or more; and
   (3) the polyester resin has a hydroxyl value of 182 to 800 eq/ton.
[2] The polyester resin according to [1], wherein the polyester resin comprises constituent units derived from an aromatic dicarboxylic acid as the polycarboxylic acid component.
[3] The polyester resin according to [2], wherein the polyester resin comprises constituent units derived from at least one component selected from the group consisting of isophthalic acid, orthophthalic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, and 2,7-naphthalenedicarboxylic acid in a total amount of 1 mol% or more when an amount of the constituent units derived from the aromatic dicarboxylic acid constituting a molecular chain of the polyester resin is 100 mol%.
[4] The polyester resin according to [2] or [3], wherein the polyester resin comprises the constituent units derived from the aromatic dicarboxylic acid in an amount of 60 mol% or more when an amount of the constituent units derived from a polycarboxylic acid constituting a molecular chain of the polyester resin is 100 mol%.
[5] The polyester resin according to any one of [2] to [4], wherein
   the aromatic dicarboxylic acid comprises at least one selected from the group consisting of terephthalic acid, 2,5-furandicarboxylic acid, and 2,6-naphthalenedicarboxylic acid; and
   the polyester resin comprises constituent units derived from terephthalic acid, 2,5-furandicarboxylic acid, and 2,6-naphthalenedicarboxylic acid in a total amount of 50 mol% or more when an amount of the constituent units derived from the aromatic dicarboxylic acid constituting a molecular chain of the polyester resin is 100 mol%.
[6] The polyester resin according to any one of [1] to [5], wherein the polyester resin has an acid value of 3 eq/ton or more.
[7] The polyester resin according to any one of [1] to [6], wherein the polyester resin comprises constituent units derived from a tri- or higher functional polycarboxylic acid and/or constituent units derived from a tri- or higher functional polyhydric alcohol, and comprises the constituent units derived from the tri- or higher functional polycarboxylic acid and the constituent units derived from the tri- or higher functional polyhydric alcohol in a total amount of 1.0 mol% or more when an amount of all constituent units constituting a molecular chain of the polyester resin is 100 mol%.
[8] The polyester resin according to any one of [1] to [7], wherein the polyester resin comprises the constituent units derived from the tri- or higher functional polycarboxylic acid in an amount of 60 mol% or more when a total amount of the constituent units derived from the tri- or higher functional polycarboxylic acid and the constituent units derived from the tri- or higher functional polyhydric alcohol is 100 mol%.
[9] The polyester resin according to any one of [1] to [8], wherein the polyester resin comprises constituent units derived from an aliphatic dicarboxylic acid and/or an alicyclic dicarboxylic acid in an amount of 20 mol% or less when an amount of the constituent units derived from a polycarboxylic acid constituting a molecular chain of the polyester resin is 100 mol%.
[10] The polyester resin according to any one of [1] to [9], wherein the polyester resin comprises constituent units derived from a dihydric alcohol (a) having one primary hydroxy group and one secondary hydroxy group in an amount of 50 mol% or more when an amount of the constituent units derived from a polyhydric alcohol constituting a molecular chain of the polyester resin is 100 mol%.
[11] The polyester resin according to [10], wherein the polyester resin comprises constituent units derived from a dihydric alcohol (b) other than the dihydric alcohol (a) in an amount of 50 mol% or less when an amount of the constituent units derived from the polyhydric alcohol constituting a molecular chain of the polyester resin is 100 mol%.
[12] A polyester resin composition comprising the polyester resin according to any one of [1] to [11] and a curing agent.
[13] A coating composition comprising the polyester resin according to any one of [1] to [11].
[14] A coating film comprising the coating composition according to [13].
[15] A metal can comprising the coating film according to [14].

### ADVANTAGEOUS EFFECTS OF THE INVENTION

According to the present invention, there is provided a polyester resin capable of forming a coating film excellent in processability and corrosion resistance. Therefore, the polyester resin of the present invention is favorably used in a polyester resin composition, a coating composition, a coating film, and a metal can, and the like.

### DESCRIPTION OF EMBODIMENTS

### <Polyester Resin>

### 1) Polyester Resin

The present invention relates to a polyester resin including a polycarboxylic acid component and a polyhydric alcohol component as copolymerization components, and satisfying the following requirements (1) to (3):
(1) the polyester resin has a glass transition temperature (Tg) of 60°C or higher;
(2) the polyester resin has a weight average molecular weight (Mw) of 50,000 or more; and
(3) the polyester resin has a hydroxyl value of 182 to 800 eq/ton.

The polyester resin of the present invention is characterized by having a high glass transition temperature (Tg) and a high weight average molecular weight (Mw) (requirement (1) and requirement (2)). In general, a resin having a high glass transition temperature (Tg) exhibits restricted molecular mobility and tends to require higher temperatures to facilitate molecular motion. Such a resin has a high melt viscosity during polymerization, which imposes a significant load on the equipment, as evidenced by an increased torque during stirring, and it is often difficult to achieve a high molecular weight (particularly a high Mw). As a result of studies conducted by the present inventors, it has been found that, in order to provide a polyester resin having a high glass transition temperature (Tg) as well as a high weight average molecular weight (Mw), it is effective to make a polyester resin highly branched and increase the hydroxyl value of the polyester resin (requirement (3)). This is because, by making the polyester resin highly branched, the entanglement of molecular chains is reduced, and the melt viscosity can be reduced. In this way, it is possible to lower the torque load and thus reduce the load on the equipment, and as a result, an improvement in the yield of the polyester resin can be expected. Furthermore, the polyester resin of the present invention has a high hydroxyl value, therefore has many reaction sites with a curing agent, and in addition, has a high glass transition temperature (Tg), so that the coating film has good corrosion resistance. Since the polyester resin has also a high weight average molecular weight (Mw), the coating film also has good processability.

In the present specification, the components shown below can be used alone or in combination of two or more.

In the present specification, the term "branched structure" refers to a branched structure in a polymer chain, and specifically refers to a structure in which three or more branches (molecular chains) extend from a single constituent unit constituting the molecular chain of the polyester resin. That is, the polyester resin having a branched structure means that the polymer molecular chain of the polyester resin has, for example, a triester structure, a tetraester structure, or a pentaester structure.

### 2) Polycarboxylic Acid Component and Polyhydric Alcohol Component

The polyester resin contains a polycarboxylic acid component and a polyhydric alcohol component as copolymerization components, and has a chemical structure obtainable as a polycondensate of a polycarboxylic acid and a polyhydric alcohol.

In the present specification, "all constituent units constituting the molecular chain of the polyester resin" and "constituent units derived from A constituting the molecular chain of the polyester resin" respectively refer to constituent units derived from all copolymerization components constituting the molecular chain of the polyester resin and constituent units derived from A constituting the molecular chain of the polyester resin. These phrases do not include constituent units derived from a compound having a polycarboxylic acid anhydride group in the molecule that is introduced to the terminal of the polyester resin after completion of the polycondensation reaction in order to adjust the acid value of the polyester resin. The proportion of each constituent unit constituting the polyester resin can be determined, for example, based on the charged amounts of copolymerization components, ¹H-NMR analysis, ¹³C-NMR analysis, and other analyses.

In the present specification, examples of the polycarboxylic acid include a tri- or higher functional polycarboxylic acid and a dicarboxylic acid. The tri- or higher functional polycarboxylic acid specifically refers to a polycarboxylic acid having three or more carboxy groups, and the number of functional groups is preferably 3 to 5, more preferably 3 to 4. The dicarboxylic acid specifically refers to a polycarboxylic acid having two carboxy groups.

Examples of the tri- or higher functional polycarboxylic acid include polycarboxylic acids and anhydrides thereof such as trimellitic acid, pyromellitic acid, trimesic acid, benzophenone tetracarboxylic acid, trimellitic anhydride, pyromellitic anhydride, benzophenone tetracarboxylic anhydride, ethylene glycol bis(anhydrotrimellitate), cyclopentanetetracarboxylic dianhydride, 2,3,6,7-naphthalenetetracarboxylic dianhydride, 1,2,5,6-naphthalenetetracarboxylic dianhydride, 4,4'-oxydiphthalic dianhydride, 5-(2,5-dioxotetrahydro-3-furanyl)-3-methyl-3-cyclohexene-1,2-dicarboxylic anhydride, and 1,2,3,4-butane tetracarboxylic acid. Among these, trimellitic acid, pyromellitic acid, trimesic acid, benzophenone tetracarboxylic acid, trimellitic anhydride, pyromellitic anhydride, benzophenone tetracarboxylic anhydride, ethylene glycol bis(anhydrotrimellitate), and 1,2,3,4-butane tetracarboxylic acid are preferred, and trimellitic acid is more preferred. The tri- or higher functional polycarboxylic acid preferably has an aromatic ring such as a benzene ring or a naphthalene ring in the molecule. The use of a polycarboxylic acid having an aromatic ring enables the introduction of a rigid skeleton into the molecule, thereby suppressing hydrolysis and facilitating formation of a coating film exhibiting excellent corrosion resistance.

Examples of the dicarboxylic acid include an aromatic dicarboxylic acid, an aliphatic dicarboxylic acid, and an alicyclic dicarboxylic acid.

Examples of the aromatic dicarboxylic acid include terephthalic acid, isophthalic acid, orthophthalic acid, 2,5-furandicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, and anhydrides thereof.

Examples of the aliphatic dicarboxylic acid (preferably acyclic) include succinic acid, glutaric acid, adipic acid, azelaic acid, sebacic acid, dodecanedioic acid, dimer acid, fumaric acid, maleic acid, itaconic acid, citraconic acid, and anhydrides thereof.

Examples of the alicyclic dicarboxylic acid include 1,4-cyclohexanedicarboxylic acid, tetrahydrophthalic acid, hexahydroisophthalic acid, 1,2-cyclohexenedicarboxylic acid, 2,5-norbornanedicarboxylic acid, and anhydrides thereof.

In the present specification, examples of the polyhydric alcohol include a tri- or higher functional polyhydric alcohol and a dihydric alcohol. The tri- or higher functional polyhydric alcohol specifically refers to a polyhydric alcohol having three or more hydroxy groups, and the number of functional groups is preferably 3 to 5, more preferably 3 to 4. The dihydric alcohol specifically refers to a polyhydric alcohol having two hydroxy groups.

Examples of the tri- or higher functional polyhydric alcohol include glycerin, trimethylolethane, trimethylolpropane, mannitol, sorbitol, and pentaerythritol. Among these, from the viewpoint of the heat resistance of the monomer itself, glycerin, trimethylolethane, trimethylolpropane, and pentaerythritol are preferred, and trimethylolethane is more preferred.

Examples of the dihydric alcohol include a dihydric alcohol (a) having one primary hydroxy group and one secondary hydroxy group, and a dihydric alcohol (b) other than the dihydric alcohol (a).

Examples of the dihydric alcohol (a) include 1,2-propanediol, 1,2-butanediol, 1,3-butanediol, 1,2-pentanediol, and 1,2-hexanediol. Among these, 1,2-propanediol and 1,2-butanediol are preferred, and 1,2-propanediol is more preferred from the viewpoint of improving corrosion resistance.

Examples of the dihydric alcohol (b) include an aliphatic glycol such as ethylene glycol, 1,3-propanediol, 2-butyl-2-ethyl-1,3-propanediol, 2-methyl-1,3-propanediol, neopentyl glycol, 3-methyl-1,5-pentanediol, 1,4-butanediol, 2,4-diethyl-1,5-pentanediol, 1,6-hexanediol, 2-methyl-1,8-octanediol, 3-methyl-1,6-hexanediol, 4-methyl-1,7-heptanediol, 4-methyl-1,8-octanediol, 1,9-nonanediol, and dimer diol; a polyether glycol such as diethylene glycol, triethylene glycol, polyethylene glycol, polypropylene glycol, and polytetramethylene glycol; and a polyhydric alcohol having a ring skeleton, such as 1,4-cyclohexanedimethanol, tricyclodecanedimethanol, hydroquinone, catechol, and resorcinol.

For the polycarboxylic acid component and the polyhydric alcohol component constituting the molecular chain of the polyester resin, a raw material derived from a biomass resource may be used. The biomass resource includes materials in which solar energy is converted and stored in the form of starch, cellulose, or the like through plant photosynthesis; bodies of animals that grow by consuming plants; and products obtained by processing plants and animals. More preferred among these biomass resources is a plant resource, and examples of the plant resource include wood, rice straw, rice hull, rice bran, old rice, corn, sugar cane, cassava, sago palms, tofu refuse, corncobs, tapioca refuse, bagasse, vegetable oil refuse, potatoes, buckwheat, soybeans, oils and fats, waste paper, papermaking residues, marine product residues, livestock wastes, sludge, and food wastes. Corn, sugar cane, cassava, and sago palms are more preferred.

Specific examples of a polycarboxylic acid raw material derived from a biomass resource include adipic acid, sebacic acid, fumaric acid, itaconic acid, terephthalic acid, and 2,5-furandicarboxylic acid.

Specific examples of a polyhydric alcohol raw material derived from a biomass resource include ethylene glycol, 1,2-propanediol, 1,3-propanediol, neopentyl glycol, 1,4-butanediol, and 1,4-cyclohexanedimethanol.

### 3) Tri- or Higher Functional Component

The polyester resin preferably contains constituent units derived from a tri- or higher functional polycarboxylic acid and/or constituent units derived from a tri- or higher functional polyhydric alcohol. In this case, when the amount of all constituent units constituting the molecular chain of the polyester resin is 100 mol%, the polyester resin contains the constituent units derived from the tri- or higher functional polycarboxylic acid and the constituent units derived from the tri- or higher functional polyhydric alcohol in a total amount of, for example, 1.0 mol% or more, desirably 1.0 to 6.0 mol%, preferably 1.2 to 6.0 mol%, more preferably 1.5 to 5.0 mol%, and even more preferably 2.0 to 4.0 mol%. The tri- or higher functional polycarboxylic acid and the tri- or higher functional polyhydric alcohol function as a branching component in the polyester resin, whereby facilitating the formation of a branched structure. By setting their amounts within the above range, sufficient reaction sites with a curing agent can be secured, and a coating film having excellent corrosion resistance can be obtained. Furthermore, the polymerization reaction becomes easier to control, making it possible to obtain a polyester resin having a higher molecular weight.

In the present invention, either the tri- or higher functional polycarboxylic acid or the tri- or higher functional polyhydric alcohol can be used as a branching component, but it is preferably mainly derived from the tri- or higher functional polycarboxylic acid. When the total amount of the constituent units derived from the tri- or higher functional polycarboxylic acid and the constituent units derived from the tri- or higher functional polyhydric alcohol is 100 mol%, the polyester resin preferably contains the constituent units derived from the tri- or higher functional polycarboxylic acid in an amount of 60 to 100 mol%, more preferably 75 to 99 mol%, and even more preferably 95 to 98 mol%.

### 4) Dicarboxylic Acid Component

The polyester resin preferably contains constituent units derived from an aromatic dicarboxylic acid. By including the constituent units derived from an aromatic dicarboxylic acid, the glass transition temperature is increased, and the corrosion resistance of the coating film is improved. In this case, when the amount of the constituent units derived from the polycarboxylic acid constituting the molecular chain of the polyester resin is 100 mol%, the polyester resin preferably contains the constituent units derived from the aromatic dicarboxylic acid in an amount of 60 to 100 mol%, more preferably 65 to 99 mol%, and even more preferably 70 to 98 mol%. By setting the content to equal to or more than the above lower limit, the glass transition temperature increases and the corrosion resistance of the coating film improves. The upper limit is not particularly limited, but is preferably 100 mol% or less, more preferably 99 mol% or less, and even more preferably 98 mol% or less. From an industrial viewpoint, a content of less than 100 mol% is acceptable.

From the viewpoint of improving corrosion resistance, the polyester resin preferably contains, as an aromatic dicarboxylic acid, at least one selected from the group consisting of terephthalic acid, 2,5-furandicarboxylic acid, and 2,6-naphthalenedicarboxylic acid. In this case, when the amount of the constituent units derived from the aromatic dicarboxylic acid constituting the molecular chain of the polyester resin is 100 mol%, the polyester resin preferably contains constituent units derived from terephthalic acid, 2,5-furandicarboxylic acid, and 2,6-naphthalenedicarboxylic acid in a total amount of 50 to 100 mol%, more preferably 60 to 95 mol%, and even more preferably 70 to 90 mol%. By setting the content within the above range, the corrosion resistance of the coating film improves.

From the viewpoint of effectively suppressing gelation during polymerization, the polyester resin preferably contains, as an aromatic dicarboxylic acid, at least one selected from the group consisting of isophthalic acid, orthophthalic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, and 2,7-naphthalenedicarboxylic acid; more preferably isophthalic acid and/or orthophthalic acid; and even more preferably orthophthalic acid. In this case, when the amount of the constituent units derived from the aromatic dicarboxylic acid constituting the molecular chain of the polyester resin is 100 mol%, the polyester resin preferably contains constituent units derived from at least one component selected from the group consisting of isophthalic acid, orthophthalic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, and 2,7-naphthalenedicarboxylic acid in a total amount of 1 to 50 mol%, more preferably 5 to 40 mol%, and even more preferably 10 to 30 mol%. By setting the content within the above range, gelation during polymerization can be effectively suppressed.

The polyester resin may contain constituent units derived from an aliphatic dicarboxylic acid and/or an alicyclic dicarboxylic acid. In this case, when the amount of the constituent units derived from the polycarboxylic acid constituting the molecular chain of the polyester resin is 100 mol%, the polyester resin preferably contains the constituent units derived from an aliphatic dicarboxylic acid and/or an alicyclic dicarboxylic acid in a total amount of 20 mol% or less, more preferably 19 mol% or less, even more preferably 18 mol% or less, further more preferably 15 mol% or less, and particularly preferably 10 mol% or less. By setting the content to equal to or less than the above upper limit, the corrosion resistance of the coating film can be maintained, and the processability of the coating film is improved.

### 5) Dihydric Alcohol Component

The polyester resin preferably contains constituent units derived from a dihydric alcohol (a) having one primary hydroxy group and one secondary hydroxy group. In this case, when the amount of the constituent units derived from the polyhydric alcohol constituting the molecular chain of the polyester resin is 100 mol%, the polyester resin preferably contains a constituent units derived from the dihydric alcohol (a) in an amount of, for example, 50 mol% or more, more preferably 60 mol% or more, even more preferably 70 mol% or more, still more preferably 80 mol% or more, and particularly preferably 90 mol% or more. The upper limit is not particularly limited, but is preferably 100 mol% or less, and may be, for example, 98 mol% or less, 95 mol% or less, 90 mol% or less, or 80 mol% or less. That is, when the amount of the constituent units derived from the polyhydric alcohol constituting the molecular chain of the polyester resin is 100 mol%, the polyester resin preferably contains the constituent units derived from the dihydric alcohol (a) in an amount of 50 to 100 mol%, 50 to 98 mol%, 50 to 95 mol%, 50 to 90 mol%, 50 to 80 mol%, 60 to 100 mol%, 70 to 100 mol%, 80 to 100 mol%, or 90 to 100 mol%. When a polyester resin is made highly branched by using many branching components to increase the hydroxyl value of the polyester resin, the polyester resin undergoes rapid gelation during polymerization and thus has difficulty in increasing the molecular weight (particularly achieving a high Mw). Although the mechanism of action is not limited to the following, it is presumed that, by copolymerizing a predetermined amount of a specific dihydric alcohol (a) having a relatively low reactivity, the polycondensation reaction proceeds slowly, and gelation can be suppressed even when many branching components are present. When the content is equal to or more than the above lower limit, the reaction rate during polymerization of the polyester resin decreases, making it easier to control the reaction, so that gelation can be suppressed.

The polyester resin may also contain, as an optional component, constituent units derived from a dihydric alcohol (b) other than the dihydric alcohol (a). When the amount of the constituent units derived from the polyhydric alcohol constituting the molecular chain of the polyester resin is 100 mol%, the polyester resin preferably contains the constituent units derived from the dihydric alcohol (b) in an amount of 50 mol% or less, more preferably 40 mol% or less, and even more preferably 30 mol% or less, and may contain in an amount of 0 mol%. By setting the content to equal to or less than the above upper limit, the reaction rate during polymerization of the polyester resin decreases, thereby facilitating reaction control and enabling suppression of gelation.

### 6) Other Components

The polyester resin may further contain constituent units derived from components other than those described above. The polyester resin may contain constituent units derived from a component having a phenolic hydroxy group, such as diphenolic acid, p-hydroxybenzoic acid, p-hydroxyphenylacetic acid, p-hydroxyphenylpropionic acid, p-hydroxyphenethyl alcohol, and 5-hydroxyisophthalic acid. However, since a phenolic hydroxy group does not contribute to an esterification reaction, the use of such a component is expected to cap the chain ends of the polyester resin, thereby making it difficult to control the weight average molecular weight (Mw). Therefore, when the amount of all constituent units constituting the molecular chain of the polyester resin is 100 mol%, the polyester resin preferably contains the constituent units derived from the component having a phenolic hydroxy group in an amount of 5 mol% or less, more preferably 3 mol% or less, even more preferably 1 mol% or less, and most preferably 0 mol%. By setting the content to equal to or less than the above upper limit, the polyester resin can have a weight average molecular weight (Mw) within a preferred range, and the processability of the coating film can be improved.

The polyester resin may further contain, for example, constituent units derived from a component having a molecular weight of 500 or more. Specific examples of the component having a molecular weight of 500 or more include dimer acid, dimer diol, polytetramethylene glycol, polyethylene glycol, polypropylene glycol, hydroxy-terminated polybutadiene, hydroxy-terminated polyisoprene, and hydroxy-terminated polyolefin. In the present invention, the copolymerization amount of such components is preferably small. When the amount of all constituent units constituting the molecular chain of the polyester resin is 100 mol%, the polyester resin preferably contains the constituent units derived from a component having a molecular weight of 500 or more in an amount of 5 mol% or less, more preferably 3 mol% or less, even more preferably 1 mol% or less, and most preferably 0 mol%. By setting the content to equal to or less than the above upper limit, the branched structures (reaction sites) in the polymer molecular chain of the polyester resin are located closer to each other, making it possible to obtain a resin having a higher crosslink density.

### 7) Characteristics of Polyester

The polyester resin has a weight average molecular weight (Mw), as measured by gel permeation chromatography (GPC) using polystyrene standards, of 50,000 or more, desirably 50,000 to 400,000, preferably 51,000 to 400,000, more preferably 55,000 to 350,000, even more preferably 60,000 to 300,000, and still more preferably 70,000 to 280,000. By setting the Mw within the above range, the reactivity with a curing agent is improved, and a coating film excellent in corrosion resistance and processability can be obtained.

The polyester resin has a number average molecular weight (Mn), as measured by gel permeation chromatography (GPC) using polystyrene standards, of preferably 8,000 to 25,000, more preferably 9,000 to 20,000, and even more preferably 10,000 to 18,000. By setting the Mn within the above range, the reactivity with a curing agent is improved, and a coating film excellent in corrosion resistance and processability can be obtained.

The polyester resin has a molecular weight distribution (Mw/Mn), as measured by gel permeation chromatography (GPC) using polystyrene standards, of preferably 5.0 to 30.0, more preferably 5.5 to 25.0, and even more preferably 6.5 to 20.0. By setting the Mw/Mn within the above range, the reactivity with a curing agent is improved, and a coating film excellent in corrosion resistance and processability can be obtained. Since the polyester resin of the present invention has a particularly high weight average molecular weight (Mw), the molecular weight distribution (Mw/Mn) tends to be broad.

The polyester resin has a hydroxyl value of preferably 182 to 800 eq/ton, more preferably 190 to 600 eq/ton, and even more preferably 200 to 400 eq/ton. By setting the hydroxyl value within the above range, the reactivity with a curing agent is improved, and a coating film excellent in corrosion resistance and processability can be obtained. In the present invention, in particular, by increasing the number of branched structures in the molecular chain of the polyester resin to make the polyester resin highly branched, the entanglement of molecular chains is reduced, thereby reducing the melt viscosity. When the polyester resin is highly branched, the number of polymer molecular chain ends in the polyester resin increases relatively, and the hydroxyl value also increases, which is preferable from the viewpoint of corrosion resistance. Making the polyester resin highly branched also contributes to improving the weight average molecular weight (Mw).

The polyester resin has an acid value of, for example, 3 eq/ton or more, desirably 3 to 600 eq/ton, preferably 70 to 600 eq/ton, more preferably 80 to 500 eq/ton, even more preferably 90 to 400 eq/ton, and still more preferably 100 to 350 eq/ton. In particular, by setting the acid value to 70 eq/ton or more, a larger number of reactive sites with a curing agent can be introduced, thereby increasing the crosslinking density. By setting the acid value to equal to or less than the above upper limit, the polymerization reaction becomes easier to control, making it possible to obtain a polyester resin having a higher molecular weight.

The acid value may be imparted to the polyester resin by any method. Examples of the method for imparting an acid value include a method in which a compound having a polycarboxylic acid anhydride group in the molecule is subjected to an addition reaction at a later stage of polycondensation, and a method in which a prepolymer (oligomer) is first adjusted to have a high acid value at the stage of the prepolymer, and then subjected to polycondensation to obtain a polyester resin having an acid value. The former method, i.e., the method of being subjected to an addition reaction, is preferred from the viewpoints of ease of operation and ease of obtaining a desired acid value.

Among the compound having a polycarboxylic acid anhydride group in the molecule for imparting an acid value to the polyester resin, examples of a carboxylic acid monoanhydride include phthalic anhydride, succinic anhydride, maleic anhydride, trimellitic anhydride, itaconic anhydride, and citraconic anhydride. Among these, trimellitic anhydride is preferred from the viewpoints of versatility and economy.

Among the compound having a polycarboxylic acid anhydride group in the molecule for imparting an acid value to the polyester resin, examples of a carboxylic acid polyanhydride include pyromellitic anhydride, 1,2,3,4-butanetetracarboxylic dianhydride, 1,2,3,4-cyclopentanetetracarboxylic dianhydride, 3,3',4,4'-benzophenonetetracarboxylic dianhydride, 2,3,6,7-naphthalenetetracarboxylic dianhydride, ethylene glycol bistrimellitate dianhydride, and 2,2',3,3'-biphenyltetracarboxylic dianhydride. Among these, ethylene glycol bistrimellitate dianhydride is preferred from the viewpoints of versatility and economy.

The carboxylic acid monoanhydride and the carboxylic acid polyanhydride may each be used alone or in combination of two or more.

The polyester resin has a glass transition temperature (Tg) of 60°C or higher, desirably 60 to 100°C, preferably 62 to 100°C, more preferably 65 to 95°C, and even more preferably 70 to 90°C. Particularly, by setting Tg to equal to or more than the above lower limit, the corrosion resistance of the coating film can be improved. By setting Tg to equal to or lower than the above upper limit, the processability of the coating film becomes favorable. The polyester resin may be either a crystalline resin or an amorphous resin, but is preferably an amorphous resin.

The polyester resin preferably has a reduced viscosity of 0.30 to 0.70 dl/g, more preferably 0.35 to 0.65 dl/g, and even more preferably 0.4 to 0.60 dl/g. By setting the reduced viscosity to equal to or less than the above upper limit, the toughness of the coating film is improved and the processability of the coating film becomes favorable. By setting the reduced viscosity to equal to or more than the above lower limit, gelation during polymerization can be suppressed.

The polyester resin may also be dispersed in an aqueous medium by a known dispersion method and used as an aqueous dispersion of the polyester resin. Examples of the known dispersion methods include a dispersion method using an emulsifier.

### 8) Production Method

A method for producing the polyester resin will be described.

In the esterification/transesterification reaction, all monomer components and/or oligomers thereof are heated and melted to react with each other. The esterification/transesterification temperature is preferably 180 to 250°C, and more preferably 200 to 250°C. The reaction time is preferably 1.5 to 10 hours, and more preferably 3 to 6 hours. The reaction time refers to the period from when the desired reaction temperature is reached until the subsequent polycondensation reaction is initiated.

In the polycondensation reaction, the polycondensation is advanced under reduced pressure at a temperature of 220 to 280°C by distilling off the polyhydric alcohol component from the esterified product obtained in the esterification reaction, until a desired molecular weight is reached. The reaction temperature for the polycondensation is preferably 220 to 280°C, more preferably 240 to 275°C. The pressure reduction degree is preferably 150 Pa or less. An insufficient pressure reduction degree tends to prolong the polycondensation time and is therefore not preferable. The pressure is preferably gradually reduced over a period of 30 to 180 minutes until it reaches 150 Pa or less from atmospheric pressure.

In the esterification/transesterification reaction and the polycondensation reaction, polymerization may be carried out, as necessary, using a catalyst such as: an organic titanate compound such as tetrabutyl titanate, tetraisopropyl titanate, titanium oxyacetylacetonate; a germanium compound such as germanium dioxide, tetra-n-butoxy germanium; an antimony compound such as antimony oxide, tributoxy antimony; an organotin compound such as tin octylate; or a metal acetate such as magnesium acetate, iron acetate, zinc acetate, manganese acetate, cobalt acetate, aluminum acetate. From the viewpoint of reaction activity, an organic titanate compound is preferable, while from the viewpoint of suppressing coloration of the resin, germanium dioxide is preferable.

### <Polyester Resin Composition>

The polyester resin composition of the present invention contains at least the polyester resin and a curing agent. By incorporating a curing agent, the polyester resin composition can be used as an adhesive, a paint, a coating composition, and the like, and a cured coating film having excellent processability and corrosion resistance can be obtained.

In the present specification, the curing agent refers to any known curing agent that reacts with a polyester resin and thus forms a crosslinked structure. Examples of a form of the crosslinking structure include: a reaction of formation of an intermolecular carbon-carbon bond by reacting an unsaturated double bond in the polyester resin through a radical addition reaction, a cationic addition reaction, an anionic addition reaction, or the like; and formation of an intermolecular bond through a condensation reaction, a polyaddition reaction, a transesterification reaction, or the like with a polycarboxylic acid group or a polyhydric alcohol group in the polyester resin. Examples of the curing agent include a phenolic resin, an amino resin, an epoxy compound, an isocyanate compound, a polyol such as a β-hydroxyamide compound, a polycarboxylic acid, and an unsaturated bond-containing resin. Among these, a phenolic resin, an amino resin, an epoxy compound, and an isocyanate compound are preferably used because they are soluble in both an aqueous system and an organic solvent system and can readily provide a cured coating film with a high crosslink density.

Examples of the phenolic resin include a product synthesized from a trifunctional phenolic compound such as carbolic acid, m-cresol, m-ethylphenol, 3,5-xylenol, and m-methoxyphenol, or a bifunctional phenolic compound such as p-cresol, o-cresol, p-tert-butylphenol, p-ethylphenol, 2,3-xylenol, 2,5-xylenol, and m-methoxyphenol, and formaldehyde in the presence of an alkali catalyst, and a product obtained by etherifying part or whole of the methylol groups of the above product with a lower alcohol.

Examples of the amino resin include a formalin adduct of urea, melamine, or benzoguanamine, and a product etherified by reacting such a formalin adduct with a lower alcohol.

The epoxy compound is not particularly limited as long as it has two or more epoxy groups in one molecule. Specific examples of the epoxy compound include glycidyl ether of bisphenol A and an oligomer thereof, diglycidyl orthophthalate, diglycidyl isophthalate, diglycidyl terephthalate, diglycidyl p-hydroxybenzoate, diglycidyl tetrahydrophthalate, diglycidyl hexahydrophthalate, diglycidyl succinate, diglycidyl adipate, diglycidyl sebacate, ethylene glycol diglycidyl ester, propylene glycol diglycidyl ester, 1,4-butanediol diglycidyl ester, 1,6-hexanediol diglycidyl ester as well as polyalkylene glycol diglycidyl ester, triglycidyl trimellitate, triglycidyl isocyanurate, 1,4-glycidyloxybenzene, diglycidyl propylene urea, glycerol triglycidyl ether, trimethylolethane triglycidyl ether, trimethylolpropane triglycidyl ether, sorbitol polyglycidyl ether, pentaerythritol tetraglycidyl ether, and triglycidyl ether of an adduct of glycerol with alkylene oxide. These compounds may be used alone or in combination of two or more. Among these, an adduct of a glycidyl group with sorbitol, glycerin, or pentaerythritol is preferably used because such an adduct is soluble in both an aqueous system and an organic solvent system and can easily give a cured coating film with a high crosslink density. As the curing catalyst, any of various amine-based catalysts are effectively used.

Examples of the isocyanate compound include: an aromatic diisocyanate such as 2,4-tolylene diisocyanate, 2,6-tolylene diisocyanate, xylene-1,4-diisocyanate, xylene-1,3-diisocyanate, tetramethylxylene diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate; an aromatic polyisocyanate such as polymethylene polyisocyanate and crude tolylene diisocyanate; an aliphatic diisocyanate such as tetramethylene diisocyanate, hexamethylene diisocyanate (HDI), decamethylene diisocyanate, and lysine diisocyanate; an alicyclic diisocyanate such as isophorone diisocyanate (IPDI), hydrogenated tolylene diisocyanate, hydrogenated xylene diisocyanate, and hydrogenated diphenylmethane diisocyanate; biurets of the aforementioned isocyanates; uretdione-modified products thereof; carbodiimide-modified products thereof; isocyanurate-modified products thereof; uretonimine-modified products thereof, adducts of the aforementioned isocyanates with polyol; and mixed modified products thereof. These compounds may be used alone or in combination of two or more. They may be used in the form of a urethane precursor such as a prepolymer formed from an isocyanate compound and an active-hydrogen-containing compound such as polyol and polyamine, a modified product thereof, a derivative thereof, and a mixture thereof.

From the viewpoint of stability after blending a curing agent, a blocked isocyanate compound in which terminal NCO groups of an isocyanate compound are blocked is preferably used as the curing agent. Examples of the blocking agent include phenol-based compounds such as phenol, cresol, ethylphenol, and butylphenol; alcohol-based compounds such as 2-hydroxypyridine, butyl cellosolve, propylene glycol monomethyl ether, benzyl alcohol, methanol, ethanol, n-butanol, isobutanol, and 2-ethylhexanol; active methylene-based compounds such as dimethyl malonate, diethyl malonate, methyl acetoacetate, ethyl acetoacetate, and acetylacetone; mercaptan-based compounds such as butyl mercaptan and dodecyl mercaptan; acid amide-based compounds such as acetanilide and acetic acid amide; lactam-based compounds such as ε-caprolactam, δ-valerolactam, and γ-butyrolactam; imidazole-based compounds such as imidazole and 2-methylimidazole; urea-based compounds such as urea, thiourea, and ethylene urea; oxime-based compounds such as formamidoxime, acetaldehyde oxime, acetone oxime, methyl ethyl ketoxime, methyl isobutyl ketoxime, and cyclohexanone oxime; and amine-based compounds such as diphenylaniline, aniline, carbazole, ethyleneimine, and polyethyleneimine. These compounds may be used alone or in combination of two or more.

Reaction between such a blocking agent and the isocyanate curing agent component can be performed, for example, at 20 to 200°C by using a known inert solvent and/or catalyst as necessary. The amount of the blocking agent to be used is preferably 0.7 to 1.5 times the molar quantity of the terminal isocyanate group.

The amount of the curing agent in the polyester resin composition is preferably 1 to 50 parts by mass, more preferably 5 to 40 parts by mass, and even more preferably 8 to 30 parts by mass, relative to 100 parts by mass of the polyester resin. When the amount of the curing agent is within the above range, a coating film excellent in corrosion resistance and processability can be obtained.

The reactivity between the polyester resin and the curing agent can be evaluated by a gel (solvent-insoluble component) fraction. The gel fraction measured by the method described in Examples is preferably 50 to 100%, more preferably 60 to 100%, even more preferably 70 to 98%, and still more preferably 80 to 98%, and the upper limit thereof is 100% and may be 98% or less. By setting the gel fraction within the above range, the reactivity with the curing agent is improved, and a coating film excellent in corrosion resistance and processability can be obtained.

### <Coating Composition>

The coating composition contains at least the polyester resin of the present invention and may further contain an organic solvent. In the coating composition, the polyester resin is contained as a main component. In the coating composition, the main component is defined as the component with the highest content (mass ratio) among solid components (non-volatile components excluding volatile substances such as water and an organic solvent) that form a coating film.

Examples of the organic solvent include toluene, xylene, ethyl acetate, butyl acetate, methyl ethyl ketone, methyl isobutyl ketone, cyclohexanone, isophorone, methyl cellosolve, butyl cellosolve, ethylene glycol monoethyl ether acetate, diethylene glycol monoethyl ether acetate, ethylene glycol monoacetate, methanol, ethanol, butanol, ethylene glycol monoethyl ether, ethylene glycol monobutyl ether, diethylene glycol monobutyl ether, and Solvesso. These may be used alone or in combination of two or more in consideration of solubility, an evaporation rate, and the like.

The coating composition may contain a known inorganic pigment such as titanium oxide and silica, and a known additive such as phosphoric acid and an esterified product thereof, a surface smoother, a defoamer, a dispersant, a lubricant, a crystal nucleating agent, and a plasticizer, depending on the required characteristics. In particular, a lubricant is important for imparting lubricity to the coating film, which is required when DI cans, DR (or DRD) cans, or other cans are formed. Preferable examples of the lubricant include fatty acid ester wax that is an esterified product of a polyol compound and fatty acid, silicone-based wax, fluorine-based wax, polyolefin wax such as polyethylene, lanolin-based wax, montan wax, and microcrystalline wax. The lubricant may be used alone or in combination of two or more.

The coating composition may further contain other resins for the purpose of modification for, for example, for imparting flexibility and adhesion to the coating film. Examples of such other resins include amorphous polyester, crystalline polyester, an ethylene-polymerizable unsaturated carboxylic acid copolymer, and an ethylene-polymerizable carboxylic acid copolymer ionomer. By blending at least one resin selected from them, flexibility and/or adhesion may be imparted to the coating film.

The coating composition can be applied to a metal plate by a known coating method such as roll coater coating and spray coating. The coating film thickness is not particularly limited, but dry film thickness is preferably in a range of 3 to 18 µm, and more preferably in a range of 5 to 15 µm. The baking conditions for the coating film are usually a temperature range of about 120 to 260°C for about 5 seconds to 30 minutes, and more preferably a temperature range of about 140 to 240°C for about 10 seconds to 20 minutes.

### <Coating Film>

The coating film of the present invention contains at least the coating composition. Specifically, the coating film refers to a polyester resin layer formed on a substrate by applying the coating composition of the present invention. In the coating film, a coating layer formed of a resin other than the polyester resin of the present invention may be provided on either an upper side or a lower side of the polyester resin layer. That is, the present invention encompasses laminated structures such as substrate/polyester resin layer, substrate/coating layer/polyester resin layer, substrate/polyester resin layer/coating layer, and substrate/coating layer/polyester resin layer/coating layer.

### <Metal Can>

The metal can of the present invention contains at least the coating film. The metal can can be obtained by forming the coating film on one surface or both surfaces, and, if necessary, on an edge surface of a metal plate made of a metal material suitable for use in, for example, beverage cans, food cans, and lids or caps thereof. Examples of the metal material include tinplate, tin-free steel, and aluminum. The metal plate made of such a metal material may be one that has been subjected in advance to phosphate treatment, chromic acid chromate treatment, phosphoric acid chromate treatment, other anticorrosion treatment using a rust-preventive agent, or a surface treatment for improving adhesion of the coating film.

The polyester resin of the present invention can be converted into a powder coating by a known pulverization method. Examples of the pulverization method include a pulverizing process. In the pulverizing process, the polyester resin composition of the present invention and, if necessary, a mixture of a rust-preventive pigment and additives are dry-mixed using a mixer such as a tumbler mixer or a Henschel mixer, and then melt-kneaded using a kneader. Examples of the kneader include general kneaders such as a single-screw or twin-screw extruder, a three-roll mill, and a Labo Plastomill. The kneaded product is cooled and solidified, and the solidified product is subjected to coarse pulverization and fine pulverization to obtain a pulverized product. Examples of the pulverizing machine include a jet mill that performs pulverization using a supersonic jet stream, and an impact-type pulverizer that pulverizes a solidified product introduced into a space formed between a high-speed rotating rotator (rotor) and a stator (liner). If necessary, additives may be further added to the pulverized product. The pulverized product is classified to adjust the powder to a desired particle size and a desired particle size distribution, thereby obtaining a powder coating composition. For the classification, a known classifier capable of removing excessively pulverized particles by centrifugal force and airflow can be used, and examples thereof include a rotating type pneumatic classifier (rotary pneumatic classifier).

The present application claims benefit of priority to Japanese Patent Application No. 2024-013102 filed on January 31, 2024. The entire contents of the specification of Japanese Patent Application No. 2024-013102 filed on January 31, 2024 are incorporated herein by reference.

### EXAMPLES

Hereinafter, the present invention will be described in more detail with reference to Examples. However, the present invention is not limited to the following Examples and may be carried out with various modifications within the scope of the gist described above and below, and all such modifications are included in the technical scope of the present invention. Unless otherwise specified, the term "part(s)" means "part(s) by mass" and the term "%" means "mass%".

### (1) Measurement of Resin Composition

A sample of the polyester resin was dissolved in deuterated chloroform, and ¹H-NMR analysis or ¹³C-NMR analysis was performed by using a nuclear magnetic resonance (NMR) spectrometer AVANCE-NEO600 manufactured by BRUKER. The mole ratio was determined from the ratio of the integrated values.

### (2) Measurement of Reduced Viscosity (unit: dl/g)

0.1 g of a sample of the polyester resin was dissolved in 25 cc of a mixture solvent of phenol/tetrachloroethane (mass ratio of 6/4), and the reduced viscosity was measured at 30°C using an Ubbelohde viscometer. In the evaluation described below in item (7), this measured value is defined as (X).

### (3) Measurement of Acid Value

0.2 g of a sample of the polyester resin was dissolved in 40 ml of chloroform and titrated with 0.01 N potassium hydroxide ethanol solution to determine the acid value expressed as equivalents per 10⁶ g (eq/ton) of the polyester resin. Phenolphthalein was used as an indicator.

### (4) Measurement of Hydroxyl Value

The polyester resin was pulverized and dried on Teflon (registered trademark) at 50°C under reduced pressure for 24 hours or longer. Next, approximately 0.5 g of the sample was precisely weighed, mixed with 10 ml of an acetylation agent (0.5 mol%/L of acetic anhydride/pyridine solution), and immersed in a water tank at 95°C or higher for 1.5 hours. After that, 10 ml of pure water was added thereto and the sample solution was allowed to cool to room temperature. Then, the solution was titrated with a N/5-NaOH solution using phenolphthalein as an indicator. A blank test was conducted in the same manner without adding the sample, and the hydroxyl value (eq/ton) was calculated according to the following equation. $Hydroxyl value = \left\{\left(B-A\right)\times 0.2\times f\times 1000/W\right\} + acid value$ (wherein A = titration volume (ml), B = titration volume (ml) of the blank, f = factor of N/5-NaOH, and W = weight of sample (g).)

### (5) Measurement of Glass Transition Temperature (Tg)

The glass transition temperature (Tg) was measured using a differential scanning calorimeter (DSC, DSC-220 manufactured by Seiko Instruments Inc). 5 mg sample of the polyester resin was placed in a sealed snap-in-lid-type aluminum container and cooled to -50°C using liquid nitrogen. Then, the temperature was increased to 200°C at a rate of 20°C/min. In the endothermic curve obtained in this process, the temperature at the intersection of a baseline before appearance of an endothermic peak and a tangent drawn toward the endothermic peak was defined as the glass transition temperature (Tg, unit: °C).

### (6) Measurement of Number Average Molecular Weight (Mn), Weight Average Molecular Weight (Mw), and Molecular Weight Distribution (Mw/Mn)

A sample of the polyester resin was dissolved and/or diluted with tetrahydrofuran to give a resin concentration of about 0.5% by weight, and the resulting solution was filtered through a polytetrafluoroethylene membrane filter with a pore size of 0.5 µm to prepare a sample for measurement. The molecular weight was measured by gel permeation chromatography (GPC) using tetrahydrofuran as a mobile phase and a differential refractive index detector. The flow rate was set to 1 mL/min, and the column temperature was set to 30°C. As the columns, KF-802, 804L, and 806L manufactured by Showa Denko were used. Monodisperse polystyrene was used as a molecular weight standard, and the molecular weight was calculated as a polystyrene-equivalent value excluding the portion corresponding to a molecular weight of less than 1,000.

### (7) Evaluation of Polymerizability

10 g of a sample of the polyester resin was subjected to a heat treatment on Teflon (registered trademark) in a nitrogen atmosphere at 230°C for 1 hour. Subsequently, the reduced viscosity (Y) of the polyester resin after the heat treatment was measured in the same manner as described above. Using the reduced viscosity (X) before the heat treatment and the reduced viscosity (Y) after the heat treatment, the evaluation was conducted according to the following criteria.

### (Criteria)

A: (X) - (Y) was 0.1 or more (the reduced viscosity decreased).
B: (X) - (Y) was 0.05 or more and less than 0.1 (the reduced viscosity slightly decreased).
C: (X) - (Y) was 0 or more and less than 0.05 (the reduced viscosity was substantially unchanged).
D: (X) - (Y) was less than 0 (the reduced viscosity increased over time, and the polyester resin was prone to gelation during polymerization).

### (8) Measurement of Gel Fraction

The gel fraction was used as an index for evaluating curability. The coating composition was applied onto a copper foil so as to have a dried thickness of 10 µm, and then heated at 200°C for 10 minutes to prepare a sample having dimensions of 10 cm in length and 2.5 cm in width. The mass of the sample before immersion in tetrahydrofuran (THF) was defined as (X). The mass of the sample after immersion in 60 mL of THF at 25°C for 1 hour, followed by drying at 100°C for 10 minutes, was defined as the mass after THF immersion (Y). The gel fraction was calculated according to the following equation. $Gel fraction \left(mass%\right) = \left[\left\{\left(Y\right)-mass of copper foil\right\}/\left\{\left(X\right)-mass of copper foil\right\}\right] \times 100$

### (9) Evaluation of Processability

The obtained test piece was bent 180° with the coating film facing outward, and cracks generated in the coating film at the bent portion were evaluated by measuring an electrical conduction value. The bending was carried out without inserting any spacer between the folded portions (so-called 0T). A sponge (width of 20 mm, depth of 50 mm, thickness of 10 mm) immersed in 1% NaCl aqueous solution was placed on an aluminum plate electrode (width of 20 mm, depth of 50 mm, thickness of 0.5 mm). The test piece was brought into contact with the sponge at a region near the center of the bent portion, with the bent portion oriented parallel to the 20 mm side of the sponge. DC voltage of 5.0 V was applied between the aluminum plate electrode and an uncoated portion on the back surface of the test piece, and the electrical conduction value was measured. A lower electrical conduction value indicates superior bending properties.

### (Criteria)

A: less than 0.5 mA
B: 0.5 mA or more and less than 2.0 mA
D: 2.0 mA or more

### (10) Evaluation of Corrosion Resistance

The obtained test piece was placed upright in a stainless-steel cup, and an aqueous solution containing 1 wt% of sodium chloride and 5 wt% of acetic acid was poured into the cup up to one-half the height of the test piece. This cup was then placed in the pressure vessel of a retort tester (ES-315, manufactured by TOMY KOGYO CO., LTD.), and a retort treatment was carried out at 125°C for 90 minutes. After the treatment, evaluation was performed on a steam-contact portion, which is considered to be exposed to more severe conditions for the coating film. The whitening and blistering of the cured coating film were visually observed and evaluated according to the following criteria.

### (Criteria)

A: Neither whitening nor blistering was observed.
B: Slight whitening and/or blistering was observed.
D: Significant whitening and/or significant blistering was observed.

### <Examples 1 to 16, Comparative Examples 1 to 2>

### <Production of Polyester Resin>

### Synthesis Example (a)

570 parts of dimethyl terephthalate, 14 parts of trimellitic anhydride, 330 parts of 1,2-propanediol, 300 parts of neopentyl glycol, and 0.4 parts of tetra-n-butyl titanate (hereinafter sometimes abbreviated as "TBT") as a catalyst (0.03 mol% based on the total acid components) were charged into a 3L four-necked flask. While gradually raising the temperature to 240°C over 3 hours, a transesterification reaction was carried out. Subsequently, the temperature was lowered to 160°C, 100 parts of orthophthalic acid were added, and an esterification reaction was carried out while gradually raising the temperature to 240°C over 3 hours. After completion of the esterification reaction, the pressure in the system was gradually reduced, and polycondensation was carried out under reduced pressure to 10 mmHg over 1 hour while raising the temperature to 240°C. Thereafter, final-stage polycondensation was carried out for 90 minutes under a vacuum of 1 mmHg or less. When the target molecular weight was reached, the reaction product was taken out to obtain a polyester resin (Synthesis Example (a)).

### Synthesis Examples (b) to (r)

In each of Synthesis Examples (b) to (e), (g) to (i), (k) to (m), and (q), a polyester resin having the resin composition shown in the table was produced by performing the transesterification and the esterification reactions in the same manner as in Synthesis Example (a), except that the feed composition was changed.

In Synthesis Example (f), a polyester resin was produced by performing the transesterification and the esterification reactions in the same manner as in Synthesis Example (a), except that the final-stage polycondensation time was set to 50 minutes.

In each of Synthesis Examples (n) to (o), polymerization was carried out in the same manner as in Synthesis Example (a). After completion of the polycondensation reaction, the reaction mixture was cooled to 220°C under a nitrogen atmosphere. Then, a predetermined amount of trimellitic anhydride was added, and the mixture was stirred at 220°C for 30 minutes under a nitrogen atmosphere. After completion of the reaction, the product was taken out to obtain a polyester resin.

In Synthesis Example (j), a polyester resin having the resin composition shown in the table was produced by a direct polymerization method, without performing the transesterification reaction step employed in Synthesis Example (a).

In Synthesis Example (p), only a transesterification reaction was performed, except that the final-stage polycondensation time was set to 50 minutes because gelation occurred when the final-stage polycondensation time was 90 minutes.

In Synthesis Example (r), a polyester resin was produced by performing the transesterification and the esterification reactions in the same manner as in Synthesis Example (a), except that the final-stage polycondensation time was set to 50 minutes.

### <Production of Coating Composition>

100 parts (solid content) of the obtained polyester resin was dissolved in cyclohexanone to obtain a polyester resin solution (solid content: about 40%). Next, to 212.5 parts of the polyester resin solution, 25 parts of IPDI-based blocked isocyanate (DESMODUR VP LS 2078/2 manufactured by Covestro, solids content: 60% by weight) as a curing agent and 0.1 parts of DBTL (dibutyltin dilaurate) as a catalyst were blended, and then the resulting mixture was diluted with cyclohexanone until the viscosity thereof reached a suitable level for coating, thereby obtaining a coating composition. Using the obtained coating composition, evaluations of gel fraction, processability, and corrosion resistance were carried out.

### <Preparation of Test Piece (Coating Film)>

The obtained coating composition was applied to one surface of a tin plate (JIS G 3303 (2008) SPTE, 70 mm ×150 mm × 0.3 mm) with a bar coater o that the dry film thickness would be 10±2 µm, followed by backing at 200^{∘}C for 10 minutes. The resulting coated plate was used as a test specimen (coating film).

**[Table 1]**

| | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Synthesis Example | | | a | b | c | d | e | f | g | h | i | j | k |
| Resin Composition | polycarboxylic acid component (mol%) | terephthalic acid | 80 | 80 | 80 | 80 | 80 | 80 | 80 | 80 | 80 | | 90 |
| | | isophthalic acid | | | | | | | | | 17 | | |
| | | orthophthalic acid | 18 | 18 | 18 | 18 | 18 | 18 | 17 | 16 | | 18 | |
| | | 2,5-furandicarboxylic acid | | | | | | | | | | 80 | |
| | | adipic acid | | | | | | | | | | | 8 |
| | | trimellitic anhydride (branching component) | 2 | 2 | 2 | 2 | 2 | 2 | 3 | 4 | 3 | 2 | 2 |
| | | trimellitic anhydride (post-addition) | | | | | | | | | | | |
| | | ethylene glycol bis(anhydrotrimellitate) (post-addition) | | | | | | | | | | | |
| | polyhydric alcohol component (mol%) | 1,2-propanediol (component (a)) | 60 | 70 | 90 | 100 | 80 | 100 | 100 | 100 | 100 | 100 | 100 |
| | | 1,2-butanediol (component (a)) | | | | | 20 | | | | | | |
| | | ethylene glycol | | | 10 | | | | | | | | |
| | | neopentyl glycol | 40 | 30 | | | | | | | | | |
| | | trimethylolpropane (branching component) | | | | | | | | | | | |
| | tri- or higher components/all constituent units (mol%) | | 1.0 | 1.0 | 1.0 | 1.0 | 1.0 | 1.0 | 1.5 | 2.0 | 1.5 | 1.0 | 1.0 |
| | component (a)/constituent unit derived from polyhydric alcohol (mol%) | | 60 | 70 | 90 | 100 | 100 | 100 | 100 | 100 | 100 | 100 | 100 |
| Resin Properties | | Reduced Viscosity (dl/g) | 0.53 | 0.53 | 0.53 | 0.53 | 0.53 | 0.40 | 0.53 | 0.53 | 0.53 | 0.53 | 0.53 |
| | | Acid Value (eq/ton) | 5 | 5 | 5 | 5 | 5 | 5 | 5 | 5 | 5 | 5 | 5 |
| | | Hydroxyl Value (eq/ton) | 230 | 230 | 230 | 230 | 230 | 300 | 280 | 330 | 280 | 230 | 230 |
| | | Tg (°C) | 65 | 68 | 75 | 75 | 63 | 70 | 74 | 74 | 76 | 74 | 65 |
| | | Mn (×10³) | 15 | 15 | 15 | 15 | 15 | 10 | 15 | 15 | 15 | 15 | 15 |
| | | Mw (×10³) | 110 | 110 | 110 | 110 | 110 | 52 | 200 | 270 | 200 | 110 | 110 |
| | | Mw/Mn | 7.3 | 7.3 | 7.3 | 7.3 | 7.3 | 5.2 | 13.3 | 18.0 | 13.3 | 7.3 | 7.3 |
| | | Polymerizability | B | B | B | A | A | A | A | A | A | A | A |
| Coating Composition Properties | | Gel Fraction (%) | 90 | 90 | 90 | 90 | 90 | 97 | 95 | 100 | 95 | 90 | 90 |
| | | Processability | A | A | A | A | A | B | A | A | A | A | A |
| | | Corrosion Resistance | A | A | A | A | A | A | A | A | A | A | A |

**[Table 2]**

| | | | Example | | | | | Comparative Example | |
|---|---|---|---|---|---|---|---|---|---|
| | | | 12 | 13 | 14 | 15 | 16 | 1 | 2 |
| Synthesis Example | | | l | m | n | o | p | q | r |
| Resin Composition | polycarboxylic acid component (mol%) | terephthalic acid | 80 | 80 | 80 | 80 | 98 | 80 | 80 |
| | | isophthalic acid | | | | | | | |
| | | orthophthalic acid | 20 | 18 | 18 | 18 | | 19 | 18 |
| | | 2,5-furandicarboxylic acid | | | | | | | |
| | | adipic acid | | | | | | | |
| | | trimellitic anhydride (branching component) | | 2 | 2 | 2 | 2 | 1 | 2 |
| | | trimellitic anhydride (post-addition) | | | 0.5 | | | | |
| | | ethylene glycol bis(anhydrotrimellitate) (post-addition) | | | | 0.5 | | | |
| | polyhydric alcohol component (mol%) | 1,2-propanediol (component (a)) | 98 | 98 | 100 | 100 | 100 | 100 | 100 |
| | | 1,2-butanediol (component (a)) | | | | | | | |
| | | ethylene glycol | | | | | | | |
| | | neopentyl glycol | | | | | | | |
| | | trimethylolpropane (branching component) | 2 | 2 | | | | | |
| | tri- or higher components/all constituent units (mol%) | | 1.0 | 2.0 | 1.0 | 1.0 | 1.0 | 0.5 | 1.0 |
| | component (a)/constituent unit derived from polyhydric alcohol (mol%) | | 98 | 98 | 100 | 100 | 100 | 100 | 100 |
| Resin Properties | | Reduced Viscosity (dl/g) | 0.53 | 0.53 | 0.53 | 0.53 | 0.40 | 0.53 | 0.32 |
| | | Acid Value (eq/ton) | 5 | 5 | 75 | 90 | 5 | 5 | 5 |
| | | Hydroxyl Value (eq/ton) | 230 | 330 | 195 | 185 | 300 | 180 | 350 |
| | | Tg (°C) | 75 | 72 | 75 | 75 | 80 | 75 | 60 |
| | | Mn (×10³) | 15 | 15 | 15 | 15 | 10 | 15 | 8 |
| | | Mw (×10³) | 110 | 270 | 110 | 110 | 52 | 45 | 35 |
| | | Mw/Mn | 7.3 | 18.0 | 7.3 | 7.3 | 5.2 | 3.0 | 4.4 |
| | | Polymerizability | A | A | A | A | C | A | A |
| Coating Composition Properties | | Gel Fraction (%) | 90 | 100 | 100 | 100 | 100 | 70 | 100 |
| | | Processability | A | A | A | A | B | D | D |
| | | Corrosion Resistance | A | A | A | A | A | D | A |

In Examples 1 to 16, the coating films containing the polyester resin exhibited excellent results in both processability and corrosion resistance.

On the other hand, in Comparative Example 1, although the glass transition temperature (Tg) was high, the polyester resin had a low hydroxyl value and did not have a sufficient branched structure, and therefore it was difficult to increase the weight average modular weight (Mw). In Comparative Example 1, the weight average molecular weight (Mw) of the polyester resin was low, and as a result, the coating film also had poor processability. Furthermore, the hydroxyl value was low, and the number of reaction sites with the curing agent was insufficient. As a result, the polyester resin obtained had poor reactivity with the curing agent, resulting in the coating film with poor corrosion resistance.

In Comparative Example 2, the weight average molecular weight (Mw) of the polyester resin was low, and as a result, the coating film had poor processability.

### INDUSTRIAL APPLICABILITY

The polyester resin of the present invention has good reactivity with a curing agent and is capable of forming a coating film excellent in processability and corrosion resistance. The polyester resin composition containing the polyester resin of the present invention is applicable to various uses. In particular, the polyester resin of the present invention can be effectively used in the form of a coating composition, adhesive composition, coating material, or the like, and is favorably used as a main component of coating composition for metal cans used for containing beverages or foods.

## Claims

1. A polyester resin comprising a polycarboxylic acid component and a polyhydric alcohol component as copolymerization components, the polyester resin satisfying the following requirements (1) to (3):
(1) the polyester resin has a glass transition temperature (Tg) of 60°C or higher;
(2) the polyester resin has a weight average molecular weight (Mw) of 50,000 or more; and
(3) the polyester resin has a hydroxyl value of 182 to 800 eq/ton.

2. The polyester resin according to claim 1, wherein the polyester resin comprises constituent units derived from an aromatic dicarboxylic acid as the polycarboxylic acid component.

3. The polyester resin according to claim 2, wherein the polyester resin comprises constituent units derived from at least one component selected from the group consisting of isophthalic acid, orthophthalic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, and 2,7-naphthalenedicarboxylic acid in a total amount of 1 mol% or more when an amount of the constituent units derived from the aromatic dicarboxylic acid constituting a molecular chain of the polyester resin is 100 mol%.

4. The polyester resin according to claim 2, wherein the polyester resin comprises the constituent units derived from the aromatic dicarboxylic acid in an amount of 60 mol% or more when an amount of the constituent units derived from a polycarboxylic acid constituting a molecular chain of the polyester resin is 100 mol%.

5. The polyester resin according to claim 2, wherein
the aromatic dicarboxylic acid comprises at least one selected from the group consisting of terephthalic acid, 2,5-furandicarboxylic acid, and 2,6-naphthalenedicarboxylic acid; and
the polyester resin comprises constituent units derived from terephthalic acid, 2,5-furandicarboxylic acid, and 2,6-naphthalenedicarboxylic acid in a total amount of 50 mol% or more when an amount of the constituent units derived from the aromatic dicarboxylic acid constituting a molecular chain of the polyester resin is 100 mol%.

6. The polyester resin according to claim 1, wherein the polyester resin has an acid value of 3 eq/ton or more.

7. The polyester resin according to claim 1, wherein the polyester resin comprises constituent units derived from a tri- or higher functional polycarboxylic acid and/or constituent units derived from a tri- or higher functional polyhydric alcohol, and comprises the constituent units derived from the tri- or higher functional polycarboxylic acid and the constituent units derived from the tri- or higher functional polyhydric alcohol in a total amount of 1.0 mol% or more when an amount of all constituent units constituting a molecular chain of the polyester resin is 100 mol%.

8. The polyester resin according to claim 7, wherein the polyester resin comprises the constituent units derived from the tri- or higher functional polycarboxylic acid in an amount of 60 mol% or more when a total amount of the constituent units derived from the tri- or higher functional polycarboxylic acid and the constituent units derived from the tri- or higher functional polyhydric alcohol is 100 mol%.

9. The polyester resin according to claim 1, wherein the polyester resin comprises constituent units derived from an aliphatic dicarboxylic acid and/or an alicyclic dicarboxylic acid in an amount of 20 mol% or less when an amount of the constituent units derived from a polycarboxylic acid constituting a molecular chain of the polyester resin is 100 mol%.

10. The polyester resin according to claim 1, wherein the polyester resin comprises constituent units derived from a dihydric alcohol (a) having one primary hydroxy group and one secondary hydroxy group in an amount of 50 mol% or more when an amount of the constituent units derived from a polyhydric alcohol constituting a molecular chain of the polyester resin is 100 mol%.

11. The polyester resin according to claim 10, wherein the polyester resin comprises constituent units derived from a dihydric alcohol (b) other than the dihydric alcohol (a) in an amount of 50 mol% or less when an amount of the constituent units derived from the polyhydric alcohol constituting a molecular chain of the polyester resin is 100 mol%.

12. A polyester resin composition comprising the polyester resin according to any one of claims 1 to 11 and a curing agent.

13. A coating composition comprising the polyester resin according to any one of claims 1 to 11.

14. A coating film comprising the coating composition according to claim 13.

15. A metal can comprising the coating film according to claim 14.
